# EUROPEAN PATENT SPECIFICATION

(11) **EP 4 517 667 B1**
(45) Date of publication and mention of the grant of the patent: **02.09.2026**
(21) Application number: 24169095.7
(22) Date of filing: 09.04.2024
(51) Int. Cl.: G06T 7/73, G06T 7/80

(54) **METHOD AND APPARATUS FOR LOCALIZATION USING AVPS MARKER**
VERFAHREN UND VORRICHTUNG ZUR LOKALISIERUNG MIT EINEM AVPS-MARKER
PROCÉDÉ ET APPAREIL DE LOCALISATION UTILISANT UN MARQUEUR AVPS

(30) Priority: 29.08.2023 KR 20230113261
(43) Date of publication of application: 05.03.2025
(73) Proprietor: Hyundai Mobis Co., Ltd., Gangnam-gu Seoul 06141 (KR)
(72) Inventor: JIN, Moon Yong, 16891 Yongin-si (KR); CHOI, Jun Ho, 16099 Uiwang-si (KR); KIM, Ki Chan, 16683 Suwon-si (KR)
(74) Representative: Vossius & Partner Patentanwälte Rechtsanwälte mbB

(56) References cited:
- US-B2- 11 136 022
- EDWIN OLSON: "AprilTag: A robust and flexible visual fiducial system", ROBOTICS AND AUTOMATION (ICRA), 2011 IEEE INTERNATIONAL CONFERENCE ON, IEEE, 9 May 2011 (2011-05-09), pages 3400 - 3407, XP032017111, ISBN: 978-1-61284-386-5, DOI: 10.1109/ICRA.2011.5979561

## Description

### TECHNICAL FIELD

The present disclosure relates to a method and apparatus for localization using an AVPS marker. More specifically, the present disclosure relates to a method and device for improving the accuracy of localization of an autonomous vehicle using an AVPS marker.

### BACKGROUND

US 11 136 022 B2 relates to the use and detection of asymmetrical markers in conjunction with an autonomous mode for a human operated vehicle system. The vehicle system adjusts at least one of a position, orientation and speed based on the detection of asymmetrical markers, which can be utilized for vehicle navigation as well as autonomous valet parking.

The contents described below simply provide background information related to the present disclosure and do not constitute prior art.

An automated valet parking system (AVPS) is being developed for parking convenience. The AVPS automatically operates a vehicle so that the vehicle moves to an empty parking space and parks when a driver gets off at a drop-off area in a parking facility. Further, the AVPS automatically moves a parked vehicle to a pick-up area upon the driver's request, allowing the driver to board the vehicle.

For safe and reliable AVPS, level 4 or higher autonomous driving is required. The AVPS must not only recognize other objects to prevent collisions, but also determine an empty parking space and a traveling route and automatically move, park, and exit vehicles. To this end, a localization technology for estimating a current position of a subject vehicle is important.

The AVPS adopts vision-based localization using a high definition map and cameras as a localization technology. The AVPS uses a coded marker specified in ISO 23374 for localization. The coded marker is a type of fiducial marker, and may be installed in a parking facility and recognized by a vehicle. The fiducial marker is an artificial marker, an object placed in the field of view of an imaging system that appears in the image produced, for use as a point of reference or a measure. The high definition map may include information on the identification (ID), position, orientation, and the like of coded markers installed in a parking facility. The accuracy of coded marker recognition affects vehicle localization performance in the AVPS.

Related arts regarding fiducial marker detection include methods for detecting ArUco markers using a general image processing techniques or deep learning. However, the related arts have problems that small markers may not be detected, markers may be incorrectly detected, or a marker recognition rate may be very low for highly distorted images.

A vehicle to which the AVPS has been applied performs localization using a high definition map and cameras. In other words, the accuracy of the localization is determined by an angle or position at which the camera has been mounted. When the angle or position at which the camera has been mounted changes from information previously entered to the vehicle in advance due to a collision or other reasons, the accuracy of the localization may decrease.

Therefore, there is a need to calibrate the camera in order to ensure the accuracy of the localization.

### SUMMARY

The invention is defined by independent claims 1 and 6.

### BRIEF DESCRIPTION OF THE DRAWINGS

FIG. 1 is a configuration diagram of a vehicle localization system using an AVPS marker according to an embodiment of the present disclosure.
FIG. 2 is a schematic block diagram illustrating a vehicle localization unit according to an embodiment of the present disclosure.
FIG. 3 is a diagram illustrating a parking facility according to an embodiment of the present disclosure.
FIG. 4 is a flowchart illustrating a process in which the vehicle localization system performs calibration according to an embodiment of the present disclosure.

### DETAILED DESCRIPTION

Hereinafter, some embodiments of the present disclosure will be described in detail with reference to the accompanying illustrative drawings. In the following description, like reference numerals preferably designate like elements, although the elements are shown in different drawings. Further, in the following description of some embodiments, a detailed description of related known components and functions when considered to obscure the subject matter of embodiments of the present disclosure will be omitted for the purpose of clarity and for brevity.

Various ordinal numbers or alpha codes such as first, second, i), ii), a), b), etc. are prefixed solely to differentiate one component from the other but not to imply or suggest the substances, order, or sequence of the components. Throughout this specification, when a part "includes" or "comprises" a component, the part is meant to further include other components, not to exclude thereof unless specifically stated to the contrary. The terms such as "unit," "module," and the like refer to one or more units for processing at least one function or operation, which may be implemented by hardware, software, or a combination thereof.

The description of embodiments of the present disclosure to be presented below in conjunction with the accompanying drawings is intended to describe exemplary embodiments of the present disclosure and is not intended to represent the only embodiments in which the technical idea of the present disclosure may be practiced.

In the present specification, the term 'AVPS marker' may be used interchangeably with the term 'coded marker', and may be briefly referred to as the term 'marker'.

A vehicle localization system using an AVPS marker according to an embodiment of the present disclosure (hereinafter referred to as 'vehicle localization system') will first be described.

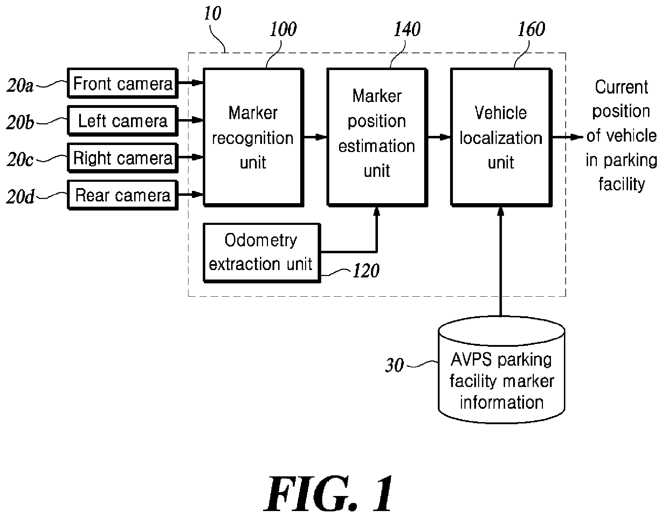

Referring to FIG. 1, a vehicle localization system 10 according to an embodiment of the present disclosure obtains a current position of a vehicle. The vehicle localization system 10 may recognize a coded marker in an image, estimate a position of the coded marker using a coded marker recognition information and odometry information of the vehicle, and then perform map matching based on the estimated coded marker position and AVPS parking facility marker information 30 to obtain the current position of the vehicle. To this end, the vehicle localization system 10 includes all or some of a marker recognition unit 100, an odometry extraction unit 120, a marker position estimation unit 140, and a vehicle localization unit 160.

The marker recognition unit 100 recognizes coded markers in the parking facility based on images obtained by capturing the front, left, right, and rear sides of the vehicle using a plurality of cameras 20a, 20b, 20c, and 20d. The marker recognition unit 100 outputs the coded marker recognition information including an ID, bounding box, and corner points of the coded marker in the image.

To this end, the marker recognition unit 100 may perform marker detection, marker classification, and marker tracking. The marker detection is a process of simultaneously detecting the bounding box and the corner points of objects belonging to the class corresponding to the coded marker within each input image frame, and a deep learning network trained through multi-task learning may be used, but the present disclosure is not limited thereto. The marker classification is a process of extracting a region of interest (ROI) corresponding to the coded marker in each image frame using the detection results, and identifying the coded marker ID by performing decoding on the ROI. The marker tracking is a process of tracking change in the position of the coded marker within a series of image frames, and coded marker tracking may be performed by additionally utilizing the identified coded marker ID information.

The odometry extraction unit 120 periodically calculates longitudinal and lateral movement distances of the vehicle over time through wheel odometry and stores the longitudinal and lateral movement distances in a buffer. The wheel odometry refers to estimating change in position of a vehicle over time using vehicle specification information and vehicle sensor information. The vehicle specification information may include wheel base, the number of wheel teeth, wheel size, and the like. The vehicle sensor information may include a wheel speed signal, a wheel pulse signal, and a steering angle signal, and the like received through a chassis controller area network (CAN).

The marker position estimation unit 140 estimates a position and orientation of the coded marker based on a center of the vehicle (hereinafter referred to as 'vehicle-based coded marker position'). Here, "vehicle-based" means indicating a relative position and orientation of the coded marker with the center of the vehicle as a reference point. First, camera-based coded marker position and orientation may be obtained using the coded marker recognition information, an actual size of the coded marker, and internal/external parameters of the camera. Here, "camera-based" means indicating a relative position and orientation of the coded marker with the camera as a reference point. Then, the vehicle-based coded marker position may be estimated by moving a reference point of the camera-based coded marker position and direction to the center of the vehicle using the vehicle specifications and installation location of the cameras.

Meanwhile, a latency occurs from a time t1 at which the marker recognition unit 100 receives an image to a time t2 at which the marker recognition unit 100 outputs the coded marker recognition information. When the latency is longer, the accuracy of vehicle-based coded marker position estimation based on the coded marker recognition information may be degraded due to a movement of the vehicle. Therefore, the marker position estimation unit 140 may obtain the longitudinal and lateral movement distances of the vehicle between the time t1 and the time t2 by using buffer data stored by the odometry extraction unit 120, and correct the estimation results of the vehicle-based coded marker position by using the obtained movement distances.

The vehicle localization unit 160 obtains the current position of the vehicle in the parking facility on the basis of coded marker recognition information (the ID of the coded marker and information on the vehicle-based coded marker position) and the AVPS parking facility marker information 30. The vehicle localization unit 160 may find the same marker ID as the ID of the recognized coded marker from the AVPS parking facility marker information 30, and use the vehicle-based coded marker position to obtain the current position of the vehicle in the parking facility.

For example, it is assumed that a marker with ID 45 is installed at a position 100 m in the longitudinal direction and 50 m in the lateral direction with reference to an entrance point of a parking facility. When the ID of the recognized coded marker is 45 and the vehicle-based coded marker position is estimated to be 3 m in the longitudinal direction and -1 m in the lateral direction, it can be seen that the vehicle is located at (103, 49) in the parking facility on the basis of an absolute position (100, 50) of the marker in the parking facility and the vehicle-based coded marker position (3, -1) by searching for the marker corresponding to ID 45 in the AVPS parking facility marker information 30.

The AVPS parking facility marker information 30 includes information on an ID, position, orientation, size, and the like of each of a plurality of coded markers installed in the parking facility. The AVPS parking facility marker information 30 may be included in a high definition map transmitted from a parking facility control center when the vehicle enters the parking facility. Here, the parking facility control center may be an R subsystem specified in ISO 23374, but is not limited thereto.

The vehicle localization system 10 recognizes a coded marker using a plurality of cameras. The vehicle localization system 10 performs the localization by estimating a position of the recognized coded marker and correcting the estimated position of the coded marker using a position or orientation of the cameras at the time of installation. However, a position or orientation of at least one of the plurality of cameras may be different from a position or orientation at the time of installation due to an impact or the like. When the position or orientation of the camera changes from that at the time of installing the camera, an error may occur in the vehicle-based coded marker position or orientation estimated by the marker position estimation unit 140. An error may occur in the current position of the vehicle obtained by the vehicle localization unit 160 due to the error in the vehicle-based coded marker position or orientation.

To eliminate an error in a position or orientation of the camera, the vehicle localization unit 160 may perform calibration.

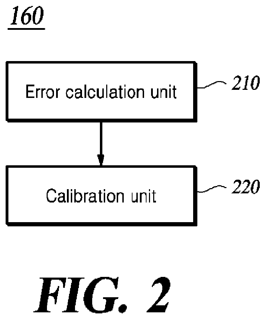

FIG. 2 is a schematic block diagram illustrating the vehicle localization unit according to an embodiment of the present disclosure.

Referring to FIG. 2, the vehicle localization unit 160 includes an error calculation unit 210 and a calibration unit 220. The components illustrated in FIG. 2 represent functionally divided elements, and at least one or more components may be implemented in an integrated form in an actual physical environment. The components illustrated in FIG. 2 are only one example, and the vehicle localization unit 160 may further include components other than those illustrated in FIG. 2, or some components may be omitted.

According to an embodiment of the present disclosure, the error calculation unit 210 compares the vehicle-based coded marker position with a position of the actual coded marker included in the AVPS parking facility marker information 30, and calculates a position error. Here, the actual coded marker has the same ID as the vehicle-based coded marker. Here, the position error is a difference between the vehicle-based coded marker position and the actual coded marker position.

According to another embodiment of the present disclosure, the error calculation unit 210 compares the vehicle-based coded marker orientation with an orientation of the actual coded marker included in the AVPS parking facility marker information 30, and calculates an orientation error. Here, the actual coded marker has the same ID as the recognized vehicle-based coded marker. Here, the orientation error is a difference between the vehicle-based coded marker orientation and the actual coded marker orientation.

The calibration unit 220 compares the calculated error with a preset threshold. When the calculated error is smaller than the preset threshold, the calibration unit 220 determines that the calibration has been completed. For example, when the calculated position error is smaller than a position threshold, the calibration unit 220 may determine that calibration has been completed. As another example, when the calculated orientation error is smaller than an orientation threshold, the calibration unit 220 may determine that the calibration has been completed. Here, the position threshold is a threshold for a determination as to whether the calibration of the position error has been completed. The orientation threshold is a threshold for a determination as to whether the calibration of the orientation error has been completed.

When the calculated error is equal to or greater than the preset threshold, the calibration unit 220 may perform calibration. That is, when the position error is equal to or greater than the position threshold, or the orientation error is equal to or greater than the orientation threshold, the calibration unit 220 may perform calibration. For example, the calibration unit 220 may correct the internal and/or external parameters of at least one of the cameras 20a, 20b, 20c, and 20d. The calibration unit 220 may correct the internal and/or external parameters of at least one of the cameras 20a, 20b, 20c, and 20d based on the position error and/or orientation error. The calibration unit 220 may correct data for the installation location of at least one of the cameras 20a, 20b, 20c, and 20d based on the position error and/or orientation error.

The calibration unit 220 may store the number of times calibration has been performed. If the number of times calibration has been performed exceeds a preset number, the calibration unit 220 may transmit a 'calibration failure' signal to the parking facility control center without performing calibration.

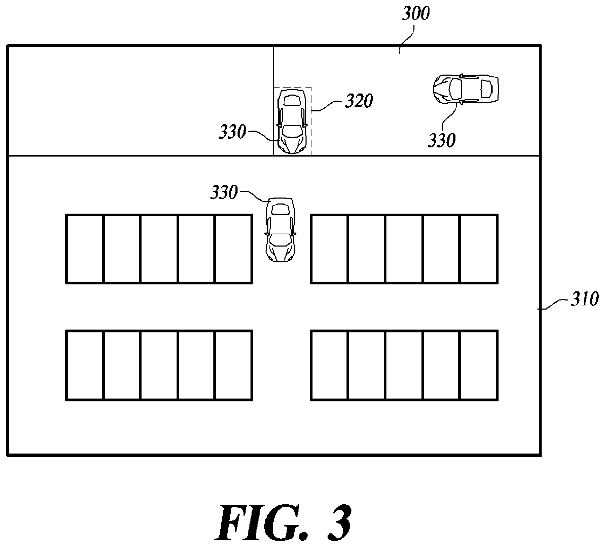

FIG. 3 is a diagram illustrating a parking facility according to an embodiment of the present disclosure.

Referring to FIG. 3, the vehicle 330 performs automatic parking by moving from a drop-off area 300 to a parking space 310. The vehicle 330 moves from the drop-off area 300 to the parking space 310 through an entry space 320. Here, the entry space 320 refers to a space or passage that connects the drop-off area 300 to the parking space 310.

Since the entry space 320 is a place that is specified independently of a position of the vehicle 330, each of the coded markers around the entry space 320 has its ID, position, and orientation specified. Therefore, when the vehicle 330 is located in the entry space 320, The vehicle localization system 10 may perform calibration with reference to the specified coded markers.

When the vehicle 330 is located in the entry space 320, the vehicle 330 may be aligned based on the parking lines of the entry space 320. For example, the vehicle 330 may be aligned so that the parking lines and the vehicle 330 are parallel by using an e-corner system. Here, the fact that the parking lines are parallel to the vehicle means that a longitudinal direction of the vehicle is parallel to the parking lines. The vehicle localization system 10 may accurately recognize the coded marker position and orientation by aligning the vehicle 330 based on the parking lines.

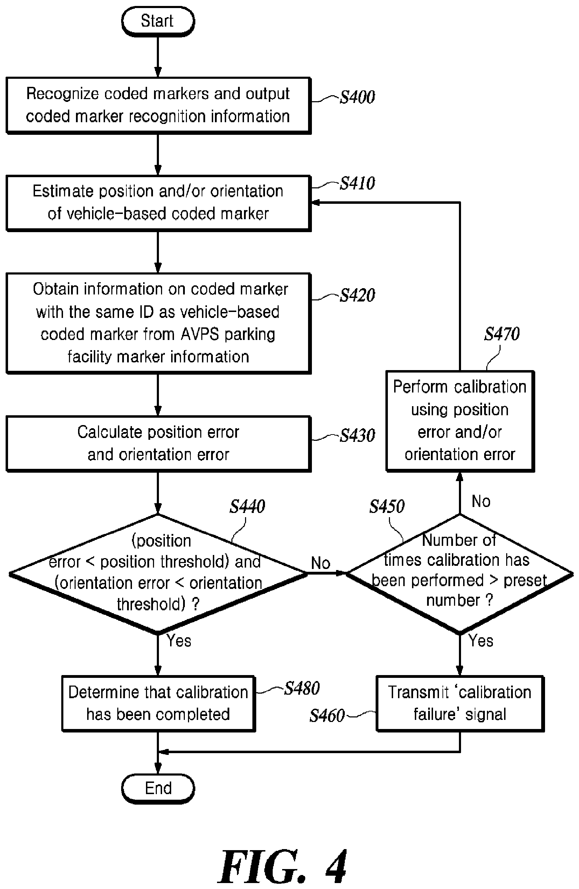

FIG. 4 is a flowchart illustrating a process in which the vehicle localization system performs calibration according to an embodiment of the present disclosure.

Referring to FIG. 4, the marker recognition unit 100 may recognize coded markers around the entry space 320. The marker recognition unit 100 generates coded marker recognition information including an ID and a plurality of corner points of each of coded markers (S400).

The marker position estimation unit 140 estimates the vehicle-based coded marker position for each of coded markers around the entry space 320. The marker position estimation unit 140 may estimate a position and orientation of the camera-based coded marker by using, for example, the coded marker recognition information, an actual size of the coded marker, and internal/external parameters of at least one of the cameras 20a, 20b, 20c, and 20d. The marker position estimation unit 140 may estimate a position and orientation of the vehicle-based coded marker from the position and orientation of the camera-based coded marker by using the vehicle specification and the installation location of at least one of the cameras 20a, 20b, 20c, and 20d (S410).

The error calculation unit 210 obtains information on the actual coded marker with the same ID as the vehicle-based coded marker from the AVPS parking facility marker information 30 containing information on an ID, position, orientation and size of each of a plurality of coded markers installed in the parking facility (S420).

The error calculation unit 210 may calculate the position error by comparing the vehicle-based coded marker position with the actual coded marker position (S430). The error calculation unit 210 may calculate the orientation error by comparing the vehicle-based coded marker orientation with the actual coded marker orientation (S430).

The calibration unit 220 may compare the position error and/or orientation error with the preset threshold (S440). The calibration unit 220 may compare the position error with the position threshold. The calibration unit 220 may compare the orientation error with the orientation threshold.

The calibration unit 220 performs calibration when the position error is equal to or greater than the preset position threshold. The calibration unit 220 performs calibration when the orientation error is equal to or greater than the preset orientation threshold. The calibration unit 220 stores the number of times calibration has been performed. The calibration unit 220 determines whether the number of times calibration has been performed exceeds the preset number (S450). When the number of times calibration has been performed exceeds the preset number, the calibration unit 220 transmits the 'calibration failure' signal to the parking facility control center without performing calibration (S460).

The calibration unit 220 performs calibration using the position error and/or orientation error when the number of times calibration has been performed does not exceed the preset number (S470). As an example, the calibration unit 220 may correct the internal and/or external parameters of at least one of the cameras 20a, 20b, 20c, and 20d based on the position error and/or orientation error. As another example, the calibration unit 220 may correct data for the installation location of at least one of the cameras 20a, 20b, 20c, and 20d based on the position error and/or orientation error.

After the calibration unit 220 performs calibration, the vehicle localization system 10 estimates the vehicle-based coded marker position and/or vehicle-based coded marker orientation again. That is, steps S410 to S440 are repeated.

When the position error is smaller than the preset position threshold and the orientation error is smaller than the preset orientation threshold, the calibration unit 220 determines that the calibration has been completed (S480).

Each component of the device or method according to embodiments of the present disclosure may be implemented in hardware, software, or a combination of the hardware and software. In addition, the function of each component may be implemented as software, and a microprocessor may be implemented to execute the software function corresponding to each component.

Various implementations of the systems and techniques described herein may include digital electronic circuits, integrated circuits, field programmable gate arrays (FPGAs), application specific integrated circuits (ASICs), computer hardware, firmware, software, and/or a combination thereof. These various implementations may include implementations with one or more computer programs executable on a programmable system. The programmable system includes at least one programmable processor (which may be a special purpose processor or a general purpose processor) combined to receive and transmit data and instructions from and to a storage system, at least one input device, and at least one output device. The computer programs (also known as programs, software, software applications, or codes) include instructions for a programmable processor and are stored in a "computer-readable storage medium".

The computer-readable storage medium includes all kinds of storage devices that store data readable by a computer system. The computer-readable storage medium may include a non-volatile or non-transitory medium such as a ROM, CD-ROM, magnetic tape, floppy disk, memory card, hard disk, magneto-optical disk, and storage device, and also further include a transitory medium such as a data transmission medium. Moreover, the computer-readable storage medium may be distributed in computer systems connected through a network, and computer-readable codes may be stored and executed in a distributed manner.

In the flowcharts in the present specification, it is described that each process sequentially occurs, but this is merely an example of the technology of an embodiment of the present disclosure. In other words, a person having ordinary skill in the art to which an embodiment of the present disclosure pertains may make various modifications and variations within the scope of the independent claims.

## Claims

1. A method of improving positioning accuracy performed by a vehicle localization system, the method comprising:
recognizing a first coded marker around an entry space in a parking facility to generate coded marker recognition information comprising an identification (ID), bounding box, and corner points of the recognized coded marker;
estimating a position and an orientation of the recognized coded marker based on the coded marker recognition information and parameters of at least one camera;
obtaining information about a second coded marker with a same ID as the recognized coded marker from a marker database containing information comprising an ID, position, orientation and size of each of a plurality of coded markers installed in the parking facility;
calculating an error based on the coded marker recognition information and the information about the second coded marker; and
performing calibration based on the error, in response that the error is greater than or equal to a preset threshold,
wherein the calibration unit is configured to transmit a calibration failure signal to a parking facility control center without performing calibration, when a number of times the calibration has been performed is greater than a preset number;
wherein performing calibration comprises correcting data about an installation location of the at least one camera based on the error; or
wherein performing calibration comprises correcting at least one of internal parameters or external parameters of the at least one camera based on the error.

2. The method of claim 1, wherein calculating the error comprises calculating a position error by comparing the estimated position of the recognized coded marker with a position of the second coded marker.

3. The method of claim 1, or 2, wherein calculating the error comprises calculating an orientation error by comparing the estimated orientation of the recognized coded marker with an orientation of the second coded marker.

4. The method of any one of claims 1 to 3, further comprising:
aligning the vehicle based on at least one parking line in the entry space.

5. The method of any one of claims 1 to 4, wherein performing calibration comprises determining that the calibration has been completed when the position error is less than the preset position threshold and the orientation error is less than the preset orientation threshold.

6. A vehicle localization system provided in a vehicle, said system comprising:
a marker recognition unit configured to recognize a coded marker in a parking facility and generate coded marker recognition information comprising an identification (ID), bounding box, and corner points of the recognized coded marker;
a marker position estimation unit configured to estimate a position and an orientation of the recognized coded marker based on the coded marker recognition information and parameters of at least one camera; and
a vehicle localization unit configured to obtain a current position of the vehicle in the parking facility,
wherein the vehicle localization unit comprises:
an error calculation unit configured to calculate an error based on the coded marker recognition information and information about a second coded marker with a same ID as the recognized coded marker from a marker database comprising information about an ID, position, orientation and size of each of a plurality of coded markers installed in the parking facility, and
a calibration unit configured to perform calibration based on the error when the error is greater than or equal to a preset threshold,
wherein the calibration unit is configured to transmit a calibration failure signal to a parking facility control center without performing calibration, when a number of times the calibration has been performed is greater than a preset number;
wherein the calibration unit is configured to correct data about an installation location of the at least one camera based on the error; or
wherein the calibration unit is configured to correct at least one of internal parameters or external parameters of the at least one camera based on the error.

7. The vehicle localization system of claim 6, wherein the error calculation unit is configured to calculate a position error by comparing the estimated position of the recognized coded marker with a position of the second coded marker.

8. The vehicle localization system of claim 6 or 7, wherein the error calculation unit is configured to calculate an orientation error by comparing the estimated orientation of the recognized coded marker orientation with an orientation of the second coded marker.

9. The vehicle localization system of any one of claims 6 to 8, wherein the calibration unit is configured to determine that the calibration has been completed when the position error is less than the preset position threshold and the orientation error is less than the preset orientation threshold.

## Patentansprüche

1. Verfahren zum Verbessern einer Positionierungsgenauigkeit, das durch ein Fahrzeuglokalisierungssystem durchgeführt wird, das Verfahren aufweisend:
Erkennen einer ersten codierten Markierung um einen Einfahrtsbereich in einer Parkeinrichtung, um Erkennungsinformationen der codierten Markierung zu erzeugen, aufweisend eine Kennung (ID), einen Begrenzungsumfang und Eckpunkte der erkannten codierten Markierung;
Schätzen einer Position und einer Orientierung der erkannten codierten Markierung basierend auf den Erkennungsinformationen der codierten Markierung und Parametern mindestens einer Kamera;
Erhalten von Informationen über eine zweite codierte Markierung mit einer gleichen ID wie die erkannte codierte Markierung aus einer Markierungsdatenbank, die Informationen enthält, aufweisend eine ID, Position, Orientierung und Größe jeder von mehreren von codierten Markierungen, die in der Parkeinrichtung installiert sind;
Berechnen eines Fehlers basierend auf den Erkennungsinformationen der codierten Markierung und den Informationen über die zweite codierte Markierung; und
Durchführen einer Kalibrierung basierend auf dem Fehler als Reaktion darauf, dass der Fehler größer als oder gleich einem voreingestellten Schwellenwert ist,
wobei die Kalibrierungseinheit konfiguriert ist, um ein Kalibrierungsfehlschlagsignal an eine Parkeinrichtungssteuerzentrale zu übertragen, ohne die Kalibrierung durchzuführen, wenn eine Anzahl von Malen, die die Kalibrierung durchgeführt wurde, größer als eine voreingestellte Anzahl ist;
wobei das Durchführen der Kalibrierung ein Korrigieren von Daten über einen Installationsort der mindestens einen Kamera basierend auf dem Fehler aufweist; oder
wobei das Durchführen der Kalibrierung das Korrigieren mindestens eines von internen Parametern oder externen Parametern der mindestens einen Kamera basierend auf dem Fehler aufweist.

2. Verfahren nach Anspruch 1, wobei das Berechnen des Fehlers das Berechnen eines Positionsfehlers durch ein Vergleichen der geschätzten Position der erkannten codierten Markierung mit einer Position der zweiten codierten Markierung aufweist.

3. Verfahren nach Anspruch 1 oder 2, wobei das Berechnen des Fehlers das Berechnen eines Orientierungsfehlers durch das Vergleichen der geschätzten Orientierung der erkannten codierten Markierung mit einer Orientierung der zweiten codierten Markierung aufweist.

4. Verfahren nach einem der Ansprüche 1 bis 3, ferner aufweisend:
Ausrichten des Fahrzeugs basierend auf mindestens einer Parklinie in dem Einfahrtsbereich.

5. Verfahren nach einem der Ansprüche 1 bis 4, wobei das Durchführen der Kalibrierung das Bestimmen aufweist, dass die Kalibrierung abgeschlossen wurde, wenn der Positionsfehler geringer als der voreingestellte Positionsschwellenwert ist und der Orientierungsfehler geringer als der voreingestellte Orientierungsschwellenwert ist.

6. Fahrzeuglokalisierungssystem, das in einem Fahrzeug bereitgestellt ist, das System aufweisend:
eine Markierungserkennungseinheit, die konfiguriert ist, um eine codierte Markierung in einer Parkeinrichtung zu erkennen und Erkennungsinformationen der codierten Markierung zu erzeugen, aufweisend eine Kennung (ID), einen Begrenzungsumfang und Eckpunkte der erkannten codierten Markierung;
eine Markierungspositionsschätzeinheit, die konfiguriert ist, um eine Position und eine Orientierung der erkannten codierten Markierung basierend auf den Erkennungsinformationen der codierten Markierung und Parametern mindestens einer Kamera zu schätzen; und
eine Fahrzeuglokalisierungseinheit, die konfiguriert ist, um eine aktuelle Position des Fahrzeugs in der Parkeinrichtung zu erhalten,
wobei die Fahrzeuglokalisierungseinheit aufweist:
eine Fehlerberechnungseinheit, die konfiguriert ist, um einen Fehler basierend auf den Erkennungsinformationen der codierten Markierung und Informationen über eine zweite codierte Markierung mit einer gleichen ID wie die erkannte codierte Markierung aus einer Markierungsdatenbank zu berechnen, aufweisend Informationen über eine ID, Position, Orientierung und Größe jeder von mehreren von codierten Markierungen, die in der Parkeinrichtung installiert sind, und
eine Kalibrierungseinheit, die konfiguriert ist, um eine Kalibrierung basierend auf dem Fehler durchzuführen, wenn der Fehler größer als oder gleich einem voreingestellten Schwellenwert ist,
wobei die Kalibrierungseinheit konfiguriert ist, um ein Kalibrierungsfehlschlagsignal an eine Parkeinrichtungssteuerzentrale zu übertragen, ohne die Kalibrierung durchzuführen, wenn eine Anzahl von Malen, die die Kalibrierung durchgeführt wurde, größer als eine voreingestellte Anzahl ist;
wobei die Kalibrierungseinheit konfiguriert ist, um Daten über einen Installationsort der mindestens einen Kamera basierend auf dem Fehler zu korrigieren; oder
wobei die Kalibrierungseinheit konfiguriert ist, um mindestens eines von internen Parametern oder externen Parametern der mindestens einen Kamera basierend auf dem Fehler zu korrigieren.

7. Fahrzeuglokalisierungssystem nach Anspruch 6, wobei die Fehlerberechnungseinheit konfiguriert ist, um einen Positionsfehler durch das Vergleichen der geschätzten Position der erkannten codierten Markierung mit einer Position der zweiten codierten Markierung zu berechnen.

8. Fahrzeuglokalisierungssystem nach Anspruch 6 oder 7, wobei die Fehlerberechnungseinheit konfiguriert ist, um einen Orientierungsfehler durch das Vergleichen der geschätzten Orientierung der erkannten codierten Markierungsorientierung mit einer Orientierung der zweiten codierten Markierung zu berechnen.

9. Fahrzeuglokalisierungssystem nach einem der Ansprüche 6 bis 8, wobei die Kalibrierungseinheit konfiguriert ist, um zu bestimmen, dass die Kalibrierung abgeschlossen wurde, wenn der Positionsfehler geringer als der voreingestellte Positionsschwellenwert ist und der Orientierungsfehler geringer als der voreingestellte Orientierungsschwellenwert ist.

## Revendications

1. Procédé permettant d'améliorer une précision de positionnement réalisé par un système de localisation de véhicule, le procédé comprenant :
la reconnaissance d'un premier marqueur codé autour d'un espace d'entrée dans une installation de stationnement pour générer des informations de reconnaissance de marqueur codées comprenant une identification (ID), une zone de délimitation et des points d'angle du marqueur codé reconnu ;
l'estimation d'une position et d'une orientation du marqueur codé reconnu sur la base des informations et des paramètres de reconnaissance de marqueur codé d'au moins une caméra ;
l'obtention d'informations concernant un second marqueur codé ayant un même ID que le marqueur codé reconnu à partir d'une base de données de marqueurs contenant des informations comprenant un ID, une position, une orientation et une taille de chacun d'une pluralité de marqueurs codés installés dans l'installation de stationnement ;
le calcul d'une erreur sur la base des informations de reconnaissance de marqueur codé et des informations concernant le second marqueur codé ; et
la réalisation d'un étalonnage sur la base de l'erreur, en réponse au fait que l'erreur est supérieure ou égale à un seuil prédéfini,
dans lequel l'unité d'étalonnage est configurée pour transmettre un signal d'échec d'étalonnage à un centre de commande d'installation de stationnement sans effectuer d'étalonnage, lorsqu'un nombre de fois où l'étalonnage a été effectué est supérieur à un nombre prédéfini ;
dans lequel la réalisation d'un étalonnage comprend la correction de données concernant un emplacement d'installation de l'au moins une caméra sur la base de l'erreur ; ou
dans lequel la réalisation de l'étalonnage comprend la correction d'au moins l'un parmi des paramètres internes ou des paramètres externes de l'au moins une caméra sur la base de l'erreur.

2. Procédé selon la revendication 1, dans lequel le calcul de l'erreur comprend le calcul d'une erreur de position en comparant la position estimée du marqueur codé reconnu avec une position du second marqueur codé.

3. Procédé selon la revendication 1 ou 2, dans lequel le calcul de l'erreur comprend le calcul d'une erreur d'orientation en comparant l'orientation estimée du marqueur codé reconnu avec une orientation du second marqueur codé.

4. Procédé selon l'une quelconque des revendications 1 à 3, comprenant en outre :
l'alignement du véhicule sur la base d'au moins une ligne de stationnement dans l'espace d'entrée.

5. Procédé selon l'une quelconque des revendications 1 à 4, dans lequel la réalisation d'un étalonnage comprend la détermination que l'étalonnage a été terminé lorsque l'erreur de position est inférieure au seuil de position prédéfini et que l'erreur d'orientation est inférieure au seuil d'orientation prédéfini.

6. Système de localisation de véhicule fourni dans un véhicule, ledit système comprenant :
une unité de reconnaissance de marqueur configurée pour reconnaître un marqueur codé dans une installation de stationnement et générer des informations de reconnaissance de marqueur codées comprenant une identification (ID), une zone de délimitation et des points d'angle du marqueur codé reconnu ;
une unité d'estimation de position de marqueur configurée pour estimer une position et une orientation du marqueur codé reconnu sur la base des informations et des paramètres de reconnaissance de marqueur codé d'au moins une caméra ; et
une unité de localisation de véhicule configurée pour obtenir une position actuelle du véhicule dans l'installation de stationnement,
dans lequel l'unité de localisation de véhicule comprend :
une unité de calcul d'erreur configurée pour calculer une erreur sur la base des informations de reconnaissance de marqueur codé et des informations concernant un second marqueur codé ayant le même ID que le marqueur codé reconnu dans une base de données de marqueurs comprenant des informations concernant un ID**,** une position, une orientation et une taille de chacun d'une pluralité de marqueurs codés installés dans l'installation de stationnement, et
une unité d'étalonnage configurée pour effectuer un étalonnage sur la base de l'erreur lorsque l'erreur est supérieure ou égale à un seuil prédéfini,
dans lequel l'unité d'étalonnage est configurée pour transmettre un signal d'échec d'étalonnage à un centre de commande d'installation de stationnement sans effectuer d'étalonnage, lorsqu'un nombre de fois où l'étalonnage a été effectué est supérieur à un nombre prédéfini ;
dans lequel l'unité d'étalonnage est configurée pour corriger des données concernant un emplacement d'installation de l'au moins une caméra sur la base de l'erreur ; ou
dans lequel l'unité d'étalonnage est configurée pour corriger au moins l'un parmi des paramètres internes ou des paramètres externes de l'au moins une caméra sur la base de l'erreur.

7. Système de localisation de véhicule selon la revendication 6, dans lequel l'unité de calcul d'erreur est configurée pour calculer une erreur de position en comparant la position estimée du marqueur codé reconnu avec une position du second marqueur codé.

8. Système de localisation de véhicule selon la revendication 6 ou 7, dans lequel l'unité de calcul d'erreur est configurée pour calculer une erreur d'orientation en comparant l'orientation estimée de l'orientation de marqueur codé reconnue avec une orientation du second marqueur codé.

9. Système de localisation de véhicule selon l'une quelconque des revendications 6 à 8, dans lequel l'unité d'étalonnage est configurée pour déterminer que l'étalonnage est terminé lorsque l'erreur de position est inférieure au seuil de position prédéfini et que l'erreur d'orientation est inférieure au seuil d'orientation prédéfini.
